Europäisches Patentamt

(19) European Patent Office

Office européen des brevets

(11) Numéro de publication: **0 238 365**
**A1**

(12) **DEMANDE DE BREVET EUROPEEN**

(21) Numéro de dépôt: **87400070.6**

(22) Date de dépôt: **14.01.87**

(51) Int. Cl.³: **G 06 K 11/06**

(30) Priorité: **22.01.86 FR 8600862**

(43) Date de publication de la demande:
**23.09.87 Bulletin 87/39**

(84) Etats contractants désignés:
**BE CH DE ES GB IT LI LU NL**

(71) Demandeur: **BOUSSOIS S.A.**
**126-130 rue Jules Guesde**
**F-92302 Levallois-Perret(FR)**

(72) Inventeur: **de Moncuit, Frédéric**
**4 Impasse Morlet**
**F-75011 Paris(FR)**

(74) Mandataire: **Bouju, André**
**Cabinet Bouju 38 avenue de la Grande Armée**
**F-75017 Paris(FR)**

(54) **Ecran tactile pour déterminer les coordonnées d'un point sur une surface.**

(57) L'écran tactile comprend un support (1) qui comprend des bandes conductrices (2, 3, 4, 5) séparées les unes des autres, ces bandes conductrices comprenant des bandes émittrices (2, 4) et des bandes réceptrices (3, 5) imbriquées entre les précédentes. Cet écran est destiné à être touché par un objet tel que le doigt (1a) pour établir un pont électrique entre une bande émettrice et une bande réceptrice.

Les bandes conductrices (2, 3, 4, 5) sont recouvertes par une membrane (6) dont la surface (7) adjacente auxdites bandes conductrices est conductrice, cette surface conductrice présentant, lorsque le membrane (6) n'est pas touchée, une résistance électrique par unité de surface, nettement supérieure à celle des bandes conductrices (2, 3, 4, 5).

La membrane (6) est destinée à protéger mécaniquement et électriquement les bandes conductrices due clavier.

FIG. 2

EP 0 238 365 A1

**0238365**

La présente invention concerne un écran tactile pour déterminer les coordonnées d'un point sur une surface, comportant un support qui comprend des bandes conductrices séparées les unes des autres, ces bandes conductrices comportant des bandes émettrices et des bandes réceptrices imbriquées entre les précédentes, cet écran étant destiné à être touché par un objet tel que le doigt pour établir un pont électrique entre une bande émettrice et une bande réceptrice et des moyens étant prévus pour mesurer la variation de potentiel électrique sur chacune des bandes émettrice et réceptrice pour en déduire les coordonnées du point de contact de l'objet précité sur l'écran.

Un tel écran tactile a été décrit dans le brevet français n° 2 520 498 de la demanderesse.

La demanderesse a constaté que le fonctionnement du dispositif précité pouvait parfois être perturbé lorsqu'il est placé dans un milieu humide ou sale.

Par ailleurs, le fonctionnement de ce dispositif est influencé par les variations de résistance électrique du doigt de l'opérateur ou de l'objet utilisé pour établir un pont électrique entre les bandes conductrices de l'écran.

Le but de la présente invention est donc d'optimiser le fonctionnement de l'écran tactile connu ci-dessus, quelles que soient les conditions physiologiques de l'opérateur ou les conditions du milieu extérieur où se trouve l'écran.

Suivant l'invention, les bandes conductrices de l'écran sont recouvertes par une membrane dont la surface adjacente auxdites bandes conductrices est conductrice, cette surface conductrice présentant, lorsque la membrane n'est pas touchée, une résistance électrique par unité de surface nettement supérieure à celle des bandes conductrices, de façon à pouvoir créer dans la zone de contact un pont électrique entre une bande émettrice et une bande réceptrice.

Grâce à cette membrane, les bandes conductrices de

**0238365**

l'écran sont protégées mécaniquement et électriquement du milieu extérieur. De plus, cette membrane isole totalement l'opérateur.

Au repos, c'est-à-dire en l'absence de toute pression exercée sur la membrane, aucun courant ne passe entre les bandes conductrices émettrice et réceptrice adjacentes, étant donné que la résistance électrique de la surface conductrice de la membrane adjacente auxdites bandes conductrices est nettement supérieure à celle de ces bandes conductrices. Lorsque l'opérateur touche avec son doigt un point quelconque de la membrane, la pression locale du doigt sur la membrane met en contact la surface conductrice de celle-ci avec deux bandes conductrices émettrice et réceptrice juxtaposées, en établissant entre celles-ci un pont électrique local qui permet, comme expliqué dans la demande de brevet français 2 520 498 de déterminer les coordonnées X, Y du point de contact entre le doigt et l'écran.

Selon une version avantageuse de l'invention, la résistance électrique de ladite surface conductrice est au moins 25 fois plus grande que celle des bandes conductrices.

Lorsque cette condition est réalisée, le film d'air créé entre la surface conductrice de la membrane et les bandes conductrices permet d'éviter un contact électrique permanent et suffisant entre les bandes conductrices émettrice et réceptrice adjacentes. La conductibilité entre la surface conductrice de la membrane et les bandes conductrices ne devient suffisante pour créer un pont électrique entre deux bandes conductrices adjacentes seulement lorsque le doigt de l'opérateur ou autre objet exerce une faible pression locale sur la membrane.

Selon une version préférée de l'invention, la membrane est une feuille de matière plastique transparente présentant des microreliefs sur sa surface adjacente aux bandes conductrices, cette surface étant recouverte par un revêtement conducteur transparent.

De préférence, les microreliefs ont une hauteur comprise entre 2,5 et 3 µm et la distance entre ces microreliefs est comprise entre 50 et 75 µm.

Ces microreliefs constituent un léger satinage de la feuille de matière plastique qui a initialement pour but d'obtenir un aspect anti-reflet. L'autre face de la feuille est avantageusement polie.

Ces microreliefs sur lesquels est appliquée une couche conductrice transparente, par exemple composée d'oxyde d'indium et d'oxyde d'étain, assurent une forte résistance électrique de contact entre la membrane et les bandes conductrices, de sorte qu'en l'absence de toute pression exercée sur cette membrane, aucune liaison électrique n'est créée entre la couche conductrice précitée et les bandes conductrices sous-jacentes.

Par ailleurs, grâce à la transparence de la couche conductrice précitée, la présence de celle-ci ne modifie pas l'aspect de l'image des bandes conductrices vues à travers de la membrane.

D'autres particularités et avantages de l'invention apparaîtront encore dans la description ci-après.

Aux dessins annexés, donnés à titre d'exemples non limitatifs :

- la figure 1 est une vue en perspective d'un clavier tactile non recouvert par la membrane selon l'invention,

- la figure 2 est une vue en perspective à plus grande échelle du clavier conforme à l'invention recouvert par la membrane,

- la figure 3 est une vue en coupe suivant le plan III-III de la figure 2,

- la figure 4 est une vue à grande échelle du détail IV de la figure 3,

- la figure 5 est une vue analogue à la figure 4 illustrant le fonctionnement du dispositif selon l'invention,

- la figure 6 est une vue en coupe du clavier conforme à l'invention, montrant la fixation de la membrane à la périphérie du clavier,

- la figure 7 est une vue analogue à la figure 6, montrant un autre mode de fixation de la membrane.

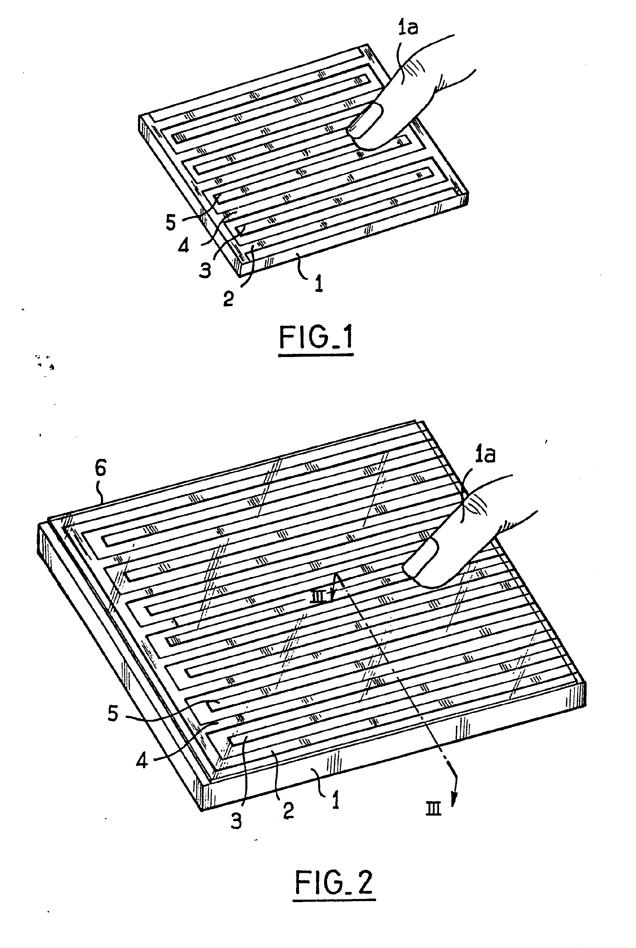

Dans la réalisation des figures 1 et 2, l'écran tactile pour déterminer les coordonnées d'un point sur une surface comporte un support 1, par exemple en verre, qui comprend des bandes conductrices 2, 3, 4, 5 de quelques microns d'épaisseur, séparées les unes des autres. Ces bandes conductrices comprennent des bandes émettrices 2, 4 et des bandes réceptrices 3, 5 imbriquées entre les précédentes. Un tel écran est décrit dans le brevet français 2 520 498 de la demanderesse.

L'écran représenté sur les figures 1 et 2 est destiné à être touché par un objet tel que le doigt 1a d'un opérateur, pour établir un pont électrique entre une bande émettrice telle que 2 ou 4, et une bande réceptrice telle que 3 ou 5. Par ailleurs, des moyens décrits en détail dans la demande de brevet français précitée sont prévus pour mesurer la variation de potentiel électrique sur chacune des bandes émettrices 2, 4 et réceptrices 3, 5 afin d'en déduire les coordonnées X, Y du point de contact du doigt 1a ou autre objet sur l'écran.

Sur les figures 2, 3 et 4 on voit que les bandes conductrices 2, 3, 4, 5 sont recouvertes par une membrane 6 dont la surface 7 adjacente aux bandes conductrices 2, 3, 4, 5 est conductrice. Cette surface conductrice 7 présente, lorsque la membrane n'est pas touchée par le doigt 1a ou autre objet, une résistance électrique par unité de surface, nettement supérieure à celle des bandes conductrices 2, 3, 4, 5.

La résistance électrique de la surface conductrice 7 est de préférence au moins 25 fois plus grande que celle des bandes conductrices 2, 3, 4, 5.

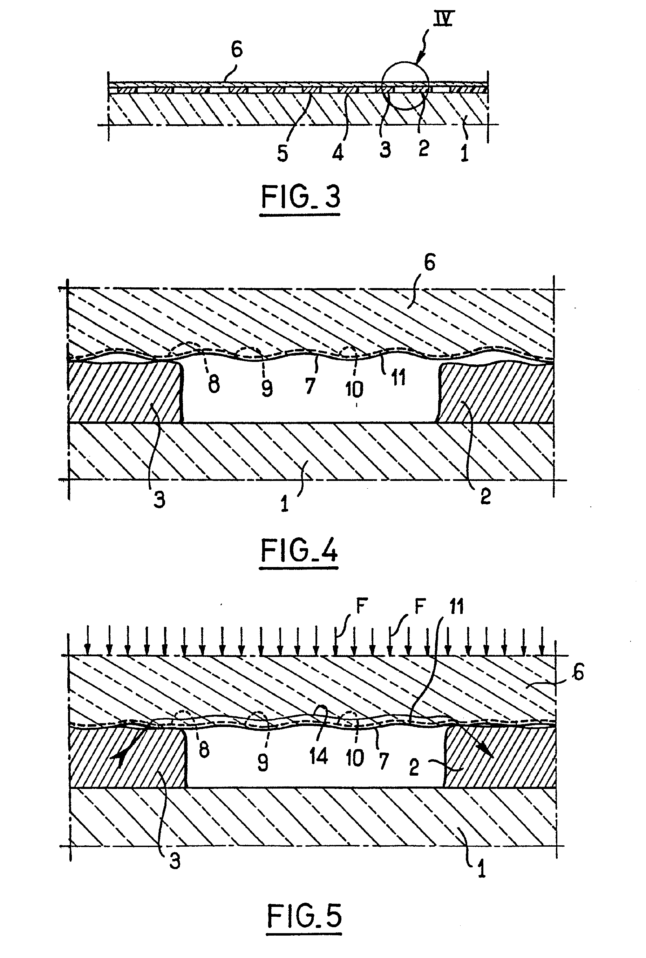

Dans la réalisation représentée, la membrane 6 est une feuille de matière plastique transparente présentant (voir figure 4) des microreliefs 8, 9, 10 sur sa surface adjacente aux bandes conductrices telles que 2, 3. La surface munie de microreliefs 8, 9, 10 est recouverte par un revêtement conducteur transparent 11.

Les microreliefs formés sur la feuille de matière plastique 6 ont initialement pour but de conférer à la surface de la feuille de matière plastique un aspect satiné anti-reflet.

Les microreliefs 8, 9, 10 ont une hauteur comprise de préférence entre 2,5 et 3 µm et la distance entre ces microreliefs est de préférence comprise entre 50 et 75µm. Grâce à ces microreliefs 8, 9, 10, la surface de la feuille de matière plastique 6 prend appui sur les bandes conductrices 2, 3 seulement par des zones ponctuelles.

De préférence, la feuille de matière plastique transparente 6 est en polycarbonate et son épaisseur est comprise entre 100 et 300 µm, de préférence 200 µm.

Ainsi, cette feuille 6 est suffisamment souple pour pouvoir se déformer localement sous l'effet de la pression exercée par le doigt 1a de l'opérateur, tout en présentant une rigidité suffisante pour rester parfaitement plane en l'absence de toute sollicitation extérieure.

Par ailleurs, le polycarbonate présente la particularité de posséder une grande transparence et de ne pas créer de charges électrostatiques nuisibles en présence du verre qui constitue le support 1.

Le revêtement conducteur transparent 11 appliqué sur la surface munie de microreliefs de la feuille de matière plastique 6 est de préférence composé d'oxyde d'indium et d'oxyde d'étain.

Le dépôt de cette couche conductrice 11 sur la feuille de matière plastique 6 peut être réalisé selon les techniques habituelles en microélectronique comme par exemple l'évaporation sous vide.

La couche conductrice 11 est suffisamment mince pour être transparente et pour conférer à la surface de la feuille de matière plastique 6 une résistance ohmique suffisamment élevée, par exemple comprise entre 500 et 3 000 ohms par carré alors que la valeur ohmique des bandes conductrices 2, 3, 4, 5 est de l'ordre de 20 ohms par carré.

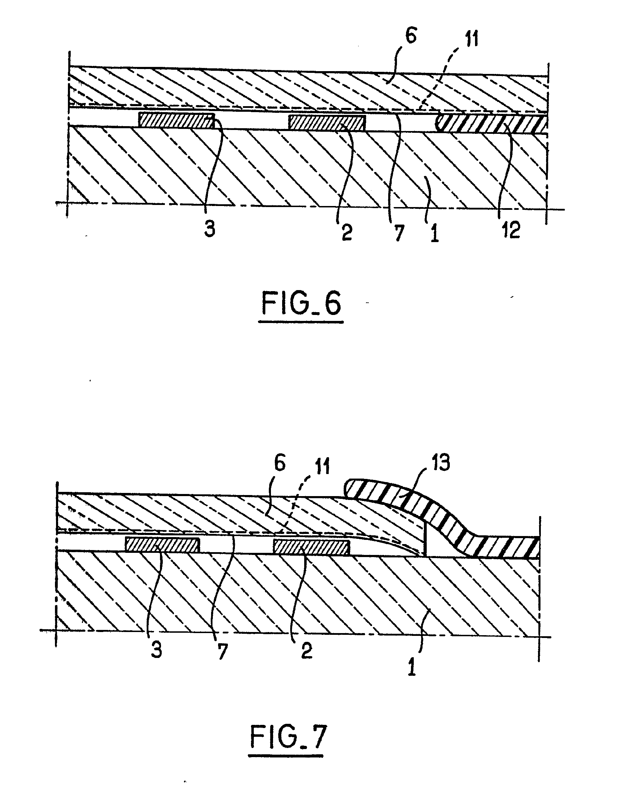

La membrane transparente 6 est fixée seulement à sa périphérie autour du support 1 du clavier, par exemple au moyen d'une couche diélectrique de colle 12 (voir figure 6) ou d'un adhésif transfert ou au moyen d'une bande adhésive diélectrique 13 (voir figure 7) qui recouvre à la fois la membrane 6 et la périphérie du support en verre 1.

La membrane 6 protège mécaniquement et électriquement les bandes conductrices 2, 3, 4, 5 à l'égard du milieu extérieur. De plus, cette membrane 6 rend le fonctionnement du dispositif insensible à l'égard de l'état des doigts de l'utilisateur et en particulier de la résistance électrique de ceux-ci. En particulier grâce à la membrane 6, l'utilisateur peut porter des gants. Par ailleurs, la membrane est électriquement passive, n'est pas reliée électroniquement au dispositif de mesure et ne nécessite aucun entretien.

Lorsque le clavier conforme à l'invention est au repos et qu'aucune pression n'est exercée sur la membrane 6, la couche conductrice 11 n'est en contact que ponctuellement avec deux bandes conductrices 2, 3 voisines adjacentes à la zone d'influence du doigt 1a de l'opérateur. Grâce à la valeur ohmique relativement élevée de la couche conductrice 11, aucune liaison électrique n'est créée entre les deux bandes conductrices 2, 3.

Lorsque le doigt de l'opérateur presse localement (force de l'ordre de 50 g) sur la membrane 6 (voir flèches F de la figure 5), la résistance électrique de contact entre la couche conductrice 11 et les bandes conductrices 2, 3 diminue fortement, de sorte qu'un pont électrique 14 est créé entre ces deux bandes conductrices 2, 3.

Ce pont électrique 14 engendre la variation de potentiel dans les deux bandes conductrices 2, 3 qui permet de déterminer les coordonnées X, Y du point de contact du doigt de l'opérateur sur le clavier, comme décrit dans le brevet français 2 520 498.

Bien entendu, l'invention n'est pas lim0238365 l'exemple de réalisation que l'on vient de décrire, et on peut apporter à celui-ci de nombreuses modifications sans sortir du cadre de l'invention.

Ainsi, la membrane 6 pourrait ne pas être transparente. Il suffirait dans ce cas de repérer sur la face extérieure de la membrane, par exemple au moyen de lignes, la trace des bandes conductrices 2, 3, 4, 5 situées sous cette membrane.

REVENDICATIONS                    **0238365**

1. Ecran tactile pour déterminer les coordonnées d'un point sur une surface, comportant un support (1) qui comprend des bandes conductrices (2, 3, 4, 5) séparées les unes des autres, ces bandes conductrices comprenant des bandes émettrices (2, 4) et des bandes réceptrices (3, 5) imbriquées entre les précédentes, cet écran étant destiné à être touché par un objet tel que le doigt (1a) pour établir un pont électrique entre une bande émettrice et une bande réceptrice, cet écran étant associé à des moyens pour mesurer la variation de potentiel électrique sur chacune des bandes émettrice et réceptrice pour en déduire les coordonnées du point de contact dudit objet sur l'écran, caractérisé en ce que les bandes conductrices (2, 3, 4, 5) sont recouvertes par une membrane (6) dont la surface (7) adjacente auxdites bandes conductrices est conductrice, cette surface conductrice présentant, lorsque la membrane (6) n'est pas touchée, une résistance électrique par unité de surface nettement supérieure à celle des bandes conductrices (2, 3, 4, 5), de façon à pouvoir créer dans la zone de contact un pont électrique entre une bande émettrice et une bande réceptrice.

2. Ecran tactile conforme à la revendication 1, caractérisé en ce que la résistance électrique de ladite surface conductrice (7) est au moins 25 fois plus grande que celle des bandes conductrices (2, 3, 4, 5).

3. Ecran tactile conforme à l'une des revendications 1 ou 2, caractérisé en ce que la membrane (6) est une feuille de matière plastique transparente présentant des microreliefs (8, 9, 10) sur sa surface adjacente aux bandes conductrices (2, 3, 4, 5), cette surface étant recouverte par un revêtement conducteur transparent (11).

4. Ecran tactile conforme à la revendication 3, caractérisé en ce que les microreliefs (8, 9, 10) ont une hauteur comprise entre 2,5 et 3 µm et la distance entre ces microreliefs est comprise entre 50 et 75 µm.

5. Ecran tactile conforme à la revendication 3, caractérisé en ce que la feuille de matière plastique transparent (6) est en polycarbonate.

6. Ecran tactile conforme à l'une des revendications 3 à 5, caractérisé en ce que l'épaisseur de la feuille de matière plastique transparente (6) est comprise entre 100 et 300 µm.

7. Ecran tactile conforme à l'une des revendications 3 à 6, caractérisé en ce que le revêtement conducteur transparent (11) est composé d'oxyde d'indium et d'oxyde d'étain.

8. Ecran tactile conforme à l'une des revendications 1 à 7, caractérisé en ce que seule la périphérie de la membrane (6) est fixée à la périphérie du support (1) de l'écran.

FIG.1

FIG.2

0238365

FIG.3

FIG.4

FIG.5

FIG. 6

FIG. 7

**Office européen des brevets**

# RAPPORT DE RECHERCHE EUROPEENNE

Numéro de la demande

**0238365**

EP  87 40 0070

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 085 012  (TAUPIN)<br>* Résumé; figure 1 * | 1 | G 06 K  11/06 |
| Y | EP-A-0 147 300  (REGIE RENAULT)<br>* Résumé; figure 1 * | 1 | |
| Y | EP-A-0 073 373  (TOKYO SHIBAURA DENKI K.K.)<br>* Page 3, ligne 22 - page 4, ligne 27; figure 1 * | 1 | |
| A | INTERNATIONAL JOURNAL OF ROBOTICS RESEARCH, vol. 1, no. 2, 1982, pages 33-44, Massachusetts Institute of Technology, Cambridge, Massachusetts, US; W.D. HILLIS: "A high-resolution imaging touch sensor"<br>* Page 33, colonne de droite, lignes 4-40; figure 1 * | 1 | DOMAINES TECHNIQUES RECHERCHES (Int. Cl.4)<br><br>G 06 K  11/06 |
| A | PATENT ABSTRACTS OF JAPAN, vol. 8, no. 269 (P-319)(1706), 8 décembre 1984; & JP-A-59 135 581 (TOSHIBA K.K.) 03.08.1984<br>* Résumé * | 1 | |

Le présent rapport de recherche a été établi pour toutes les revendications

| Lieu de la recherche | Date d'achèvement de la recherche | Examinateur |
|---|---|---|
| LA HAYE | 29-04-1987 | CERVANTES J.P.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82